# EUROPÄISCHE PATENTSCHRIFT

(11) **EP 3 010 667 B1**
(45) Veröffentlichungstag und Bekanntmachung des Hinweises auf die Patenterteilung: **02.08.2017**
(21) Anmeldenummer: 14734040.0
(22) Anmeldetag: 17.06.2014
(51) Int. Cl.: B21D 17/00, B21D 22/08, B21H 5/02, B21K 1/76, F16D 3/223

(54) **VERFAHREN UND VORRICHTUNG ZUR HERSTELLUNG ROTATIONSSYMMETRISCHER METALLBAUTEILE**
METHOD AND DEVICE FOR PRODUCING ROTATIONALLY SYMMETRICAL METAL COMPONENTS
PROCÉDÉ ET DISPOSITIF PERMETTANT DE PRODUIRE DES ÉLÉMENTS MÉTALLIQUES À SYMÉTRIE DE ROTATION

(30) Priorität: 17.06.2013 DE 102013106268
(43) Veröffentlichungstag der Anmeldung: 27.04.2016
(73) Patentinhaber: ThyssenKrupp Steel Europe AG, 47166 Duisburg (DE); WF Maschinenbau- und Blechformtechnik GmbH & Co. KG, 48324 Sendenhorst (DE)
(72) Erfinder: GÖVERT, Michael, 44139 Dortmund (DE); MALKEMPER, Christian, 48324 Sendenhorst (DE); BRINKKÖTTER, Susanne, 59227 Ahlen (DE)
(74) Vertreter: Cohausz & Florack
(86) Internationale Anmeldenummer: PCT/EP2014/062685
(87) Internationale Veröffentlichungsnummer: WO 2014/202581

(56) Entgegenhaltungen:
- EP-A2- 0 421 143
- DE-A1- 10 028 165
- US-A- 4 610 154
- WALTHER M ET AL: "INNOVATIVE VERZAHNUNGSWALZTECHNIK", WERKSTATT UND BETRIEB, CARL HANSER VERLAG GMBH & CO. KG, DE, Bd. 136, Nr. 9, 1. September 2003 (2003-09-01), Seite 78/79, XP001238411, ISSN: 0043-2792

## Beschreibung

Die Erfindung betrifft ein Verfahren zur Herstellung rotationssymmetrischer Bauteile aus Metall gemäß dem Oberbegriff des Patentanspruchs 1. Daneben betrifft der Gegenstand eine Vorrichtung zur Herstellung eines rotationssymmetrischen Bauteils aus einem Metall, gemäß dem Oberbegriff des Patentanspruchs 9.

Solch ein Verfahren und solch eine Vorrichtung sind z.B. aus der US-A-4610154 bekannt. Rotationssymmetrische Bauteile aus Metall, insbesondere Achs- oder Gelenkzapfen eines Verbindungsgelenks, werden beispielsweise zur Übertragung von Drehbewegungen verwendet, um nicht parallel verlaufende Drehachsen formschlüssig miteinander zu verbinden. Vorzugsweise werden die Gelenkzapfen aus Metall insbesondere Stahl hergestellt. Ein Gelenkzapfen bzw. ein Achszapfen weist üblicherweise eine Anschusswelle und ein glockenförmig ausgebildetes Gelenkaußenteil auf, welches zur Aufnahme von Formschlussmitteln eine Innenkontur besitzt. Bei der Herstellung der Achs- oder Gelenkzapfen muss also eine äußere Kontur, beispielsweise im Bereich der Anschlusswelle als auch eine innere Kontur im Bereich des Gelenkaußenteils geformt werden. Achs- und Gelenkzapfen aber auch andere rotationssymmetrische Bauteile müssen eine besonders hohe Präzision in ihrer Form aufweisen, um entsprechende Funktionen bereitzustellen. Beispielsweise sind bei Gelenkaußenteilen häufig Hinterschnitte vorgesehen, um einen Kugelkäfig in der Innenkontur zu fixieren. Gleichzeitig müssen allerdings auch Kugelbahnen zur Verfügung gestellt werden, in welchen die Kugeln beweglich angeordnet sind und trotz Kraftübertragung verschiedene Winkel bei der Übertragung der Drehbewegung ermöglichen. Darüber hinaus ist bekannt, rotationssymmetrische Bauteile aus Stahl unter Verwendung eines Drückwalzverfahrens herzustellen, bei welchem ein Rohling aus Metall auf einer drehbaren Aufnahme angeordnet wird, in Rotation versetzt wird und über angetriebene oder freilaufende Rollen drückgewalzt wird. Es hat sich aber herausgestellt, dass insbesondere bei komplexen Formgebungsprozessen die Verwendung von Drückwalzen im Hinblick auf die Genauigkeit und die Prozesszeit keine optimale Lösung darstellen.

Hiervon ausgehend liegt der vorliegenden Erfindung die Aufgabe zugrunde, ein Verfahren und eine Vorrichtung zur Herstellung rotationssymmetrischer Bauteile zur Verfügung zu stellen, mit welchem bzw. mit welcher rotationssymmetrische Bauteile aus Metall, insbesondere Stahl, auch mit komplexer Geometrie mit hinreichender Genauigkeit und verringerten Prozesszeiten hergestellt werden können.

Gemäß einer ersten Lehre der vorliegenden Erfindung wird die aufgezeigte Aufgabe mit einem Verfahren gemäß den Merkmalen des Patentanspruchs 1 gelöst. Erfindungsgemäß wird mindestens ein lineares Abformelement mit einer zumindest teilweise eine abgerollte Außenkontur des rotationssymmetrischen Bauteils oder einer Vorform des Bauteils aufweisenden Kontur tangential zur Oberfläche des synchron drehenden Rohlings bewegt, wobei das lineare Abformelement gleichzeitig gegen den Rohling derart gepresst wird, so dass während der Tangentialbewegung zumindest teilweise die Kontur des Abformelementes in den Rohling eingeformt wird.

Es hat sich herausgestellt, dass durch die Verwendung eines linearen Abformelementes, welches eine formgebende Kontur aufweist, die der abgerollten Kontur des herzustellenden Bauteils entspricht oder einer Vorform des herzustellenden Bauteils mit geringerer Prozesszeit und hoher Genauigkeit die Formgebung des rotationssymmetrischen Bauteils oder einer Vorform des Bauteils erreicht wird. Durch die synchrone Bewegung des Rohlings und des linearen Abformelements wird die Kontur des Abformelements auf den Rohling übertragen und ein rotationssymmetrisches Bauteil hergestellt. Der Einformvorgang der Kontur ähnelt dabei dem Drückwalzen und gewährleistet insofern eine besonders hohe Genauigkeit. Dadurch, dass die Kontur des herzustellenden Bauteils oder einer Vorform des Bauteils zuvor sehr präzise in das lineare Abformelement eingebracht werden kann, ist auch eine sehr genaue Übertragung dieser abgerollten Kontur auf den drehenden Rohling möglich, wobei auch sehr komplexe Geometrien auf den sich drehenden Rohling übertragen werden können. Lineare Abformelemente, welche die abgerollte Kontur des rotationssymmetrischen Bauteils oder einer Vorform dessen aufweisen, sind zudem einfacher herstellbar, als beispielsweise Drückwalzen mit entsprechenden Konturen.

Gemäß einer ersten Ausgestaltung des Verfahrens wird der Rohling durch ein in Drehachsenrichtung in mindestens zwei Segmente unterteiltes, lineares Abformelement umgeformt, wobei die Segmente des Abformelementes verschiedenen axialen Abschnitten des Rohlings zugeordnet sind und in die jeweiligen axialen Abschnitte des Rohlings die Kontur des zugehörigen Segments eingeformt wird. Hierdurch kann erreicht werden, dass in verschiedenen axialen Abschnitten des Rohlings, beispielsweise in Abschnitten mit unterschiedlichen Durchmessern des Rohlings, parallel unterschiedliche Konturen eingebracht werden können. Darüber hinaus kann durch die segmentweise Aufteilung des Abformelements auch auf einfache Weise einer Formänderung eines axialen Abschnittes des rotationssymmetrischen Bauteils, beispielsweise bei einem Produktwechsel, einfach durch Austausch des Segmentes Rechnung getragen werden.

Unterschiedlich strukturierte Konturen in den jeweiligen axialen Abschnitten des Rohlings können gemäß einer weiteren Ausgestaltung auf einfache Weise dadurch eingeformt werden, dass während des Abformens der Kontur des Abformelementes die Tangentialgeschwindigkeiten der einzelnen Segmente des Abformelementes verschieden sind. Durch diese Maßnahme wird ermöglicht, die unterschiedliche Bahngeschwindigkeit des Rohlings bei verschiedenen Durchmessern axialer Abschnitte des Rohlings während des Einformens der Kontur zu berücksichtigen. Werden gemäß einer weiteren Ausgestaltung zwei auf gegenüberliegenden Seiten des Rohlings mit dem Rohling im Eingriff stehende lineare Abformelemente zum Einformen der Kontur in den Rohling verwendet, kann die mechanische Belastung der drehbaren Aufnahme minimiert werden, da die gegenüberliegend angeordneten Abformelemente Kräfte auf den Rohling ausüben, welche sich im Ergebnis gegenseitig kompensieren. Hierdurch wird die Belastung der Lagerung der drehbaren Aufnahme reduziert. Gleichzeitig wird durch die doppelte Verwendung von Abformelementen eine Erhöhung der Arbeitsgeschwindigkeit bei der Umformung erreicht. Vorzugsweise kann darüber hinaus eine Innenkontur in dem Rohling erzeugt werden, dadurch dass durch mindestens ein Abformelement eine Kontur der Aufnahme des Rohlings als Innenkontur in den umzuformenden Rohling eingeformt wird. Beispielsweise kann die Aufnahme des Rohlings die Innenkontur eines Gelenkaußenteils eines Gelenkzapfens aufweisen, welche auf einfache Weise durch die linearen Abformelemente in den Rohling eingeformt werden kann.

Gemäß einer weiteren Ausgestaltung des Verfahrens wird ein rotationssymmetrisch vorgeformter Rohling umgeformt, so dass zusätzliche Umformschritte eingespart werden können.

Gemäß der Erfindung wird ein Achs- oder Gelenkzapfen eines Verbindungsgelenks mit einer Anschlusswelle und einem Gelenkaußenteil hergestellt. Die Vorteile des erfindungsgemäßen Verfahrens können bei der Herstellung von Achs- oder Gelenkzapfen besonders gut ausgenutzt werden, da sowohl eine rotationssymmetrische Innenkontur in das Gelenkaußenteil des Achs- oder Gelenkzapfens als auch eine rotationssymmetrische Formschlussmittel der Anschlusswelle mit hoher Präzision hergestellt werden müssen. Über die Verwendung der linearen Abformelemente, welche vorzugsweise in verschiedene Segmente aufgeteilt sind, wird zudem eine parallele Formgebung der verschiedenen axialen Abschnitte des Achs- oder Gelenkzapfens ermöglicht.

Die Prozesszeiten bei der Herstellung der rotationssymmetrischen Bauteile können dadurch weiter verringert werden, dass gemäß einer Ausgestaltung auf einer zweiten drehbaren Aufnahme der rotationssymmetrische Rohling unter Verwendung von mindestens einer Rolle durch Drückwalzen vorgeformt wird. Durch den Vorformschritt, welcher vorzugsweise parallel zur weiteren Umformung des vorgeformten Rohlings unter Verwendung der linearen Abformelemente durchführbar ist, kann der über die linearen Abformelemente einzubringenden Umformgrad insgesamt reduziert werden. Die Rolle kann dabei mitlaufend oder angetrieben sein.

Eine weitere Erhöhung der Kapazität bei der Herstellung von rotationssymmetrischen Bauteilen aus Metall, insbesondere Stahl, wird dadurch erreicht, dass gemäß einer weiteren Ausgestaltung mindestens auf einer weiteren drehbaren Aufnahme die Innen- und Außenkontur des fertigen Bauteils in ein vorgeformtes Bauteil unter Verwendung mindestens eines tangential zur Drehachse des Rohlings bewegten, weiteren linearen Abformelementes zumindest teilweise endgeformt wird. Durch diese Maßnahme wird der Herstellprozess der Bauteile in ein optionales Vorformen des Rohlings durch Drückwalzen, Herstellung eines die Außen- und optional die Innenkontur aufweisenden, vorgeformten Bauteils und Endformen des Bauteils unter Verwendung des vorgeformten Bauteils unterteilt. Werden alle drei Arbeitsschritte, Vorformen des Rohlings, Vorformen des Bauteils und Endformen des Bauteils, parallel abgearbeitet, beispielsweise auf insgesamt drei drehbaren Aufnahmen, kann die Herstellkapazität des Verfahrens deutlich gesteigert werden.

Darüber hinaus kann das Verfahren bei Verwendung höherfester Materialien verbessert werden, dass diese warmumgeformt werden bzw. das Drückwalzen bei Warmumformtemperaturen erfolgt. Hierzu wird der Rohling, vorzugsweise induktiv, auf eine Temperatur von 400 °C bis 1100 °C, vorzugsweise auf eine Temperatur oberhalb des AC₁- oder oberhalb des AC₃-Temperaturpunktes des Werkstoffs, erwärmt und mit der gewünschten Temperatur umgeformt. Die Warmumformung bei den entsprechenden Temperaturen kann beispielsweise aber auch nur für Teilbereiche des Gelenkteils, beispielsweise Nabe, Glocke oder für die Ausformung der Käfig-, Kugel- oder Rollbahnen angewendet werden. Nach dem Umformen kann sich ein Härten anschließen, das sich auch nur auf Teilbereiche erstrecken kann oder das ganze Bauteil umfasst. Bei der Warmumformung kann die Gefahr von Rissbildungen in höherfesten Materialien verringert werden.

Gemäß einer weiteren Lehre der vorliegenden Erfindung wird die aufgezeigte Aufgabe auch durch eine Vorrichtung zur Herstellung eines rotationssymmetrischen Bauteils aus einem Metall, gemäß den Merkmalen des Patentanspruchs 9 gelöst. Wie bereits zuvor ausgeführt, hat es sich herausgestellt, dass durch die Verwendung linearer Abformelemente durch eine Bewegung tangential zur Drehung des Rohlings, welche mit der Drehung des Rohlings synchronisiert ist, eine einfache Formgebungsmöglichkeit besteht, komplexe Geometrien in einen auf einer Drehachse sich drehenden Rohling einzubringen.

Ist als Mittel zur Bewegung des mindestens einen linearen Abformelementes mindestens eine zumindest tangential und synchron zum drehenden Rohling bewegbare Aufnahme für das mindestens eine lineare Abformelement vorgesehen, kann durch einfachen Austausch der linearen Abformelemente die Vorrichtung zur Bereitstellung anderer Geometrien des rotationssymmetrischen Bauteils umgerüstet werden.

Weist die Aufnahme des Rohlings eine Kontur auf, welche beim zumindest teilweisen Einformen der Kontur des Abformelementes in den Rohling zumindest teilweise als Innenkontur des Bauteils ausgeformt wird, kann auf einfache Weise beispielsweise ein Achs- oder Gelenkzapfen hergestellt werden. Die Innenkontur, beispielsweise des Gelenkaußenteils des Achs- oder Gelenkzapfens, wird durch das Abformen der Kontur des linearen Abformelementes in Verbindung mit der Kontur der Aufnahme des Rohlings eingeformt. Der Formprozess ist besonders präzise und führt demnach auch zu besonders präzisen Innenkonturen bzw. Außenkonturen des Bauteils.

Um unterschiedlichen Bahngeschwindigkeiten des rotierenden Rohlings aufgrund unterschiedlicher Radien Rechnung zu tragen, besteht die Möglichkeit, dass das mindestens eine lineare Abformelement in Drehachsenrichtung in mindestens zwei Segmente aufgeteilt ist, welche verschiedenen axialen Abschnitten des Rohlings zugeordnet sind. Die verschiedenen axialen Abschnitte des Rohlings können beispielsweise unterschiedliche Radien aufweisen, so dass die verschiedenen Segmente des mindestens einen Abformelementes unterschiedliche, abgerollte Konturen enthalten. Hierdurch wird die Flexibilität zur Formgebung weiter erhöht und gleichzeitig ein modularer Aufbau des mindestens einen linearen Abformelementes erreicht.

Sind Mittel zur Variierung der tangentialen Bewegungsgeschwindigkeiten der einzelnen Segmente des mindestens einen Abformelementes oder der jeweiligen Abformelemente vorgesehen, besteht die Möglichkeit die verschiedenen Bahngeschwindigkeiten der Rohlingsoberfläche zu berücksichtigen und in den Rohling oder das vorgeformte Bauteil einzubringen. Beispielsweise kann dies notwendig werden, wenn ein Axialabschnitt des Bauteils einen besonders kleinen Durchmesser aufweist, so dass die Bahngeschwindigkeit bei Drehung des Rohlings relativ gering ist. Das diesem Axialabschnitt zugeordnete Segment des mindestens einen Abformelementes kann dann zur besseren Abformung beispielsweise eine andere Tangentialgeschwindigkeit aufweisen als das Segment, welches für einen Axialabschnitt beispielsweise mit einem großen Durchmesser mit einer hohen Bahngeschwindigkeit vorgesehen ist. Insbesondere kann durch die Mittel zur Variierung der tangentialen Bewegungsgeschwindigkeit der Segmente erreicht werden, dass mit einer Kontur im Segment verschiedene Konturen im Bauteil erzeugt werden können.

Werden mehrere Abformelemente zur Formgebung verwendet, kann durch die Variierung der tangentialen Bewegungsgeschwindigkeit des jeweiligen Abformelementes eine unterschiedliche Kontur in den Rohling mit dem jeweiligen Abformelement auf einfache Weise eingeformt werden.

Besonders bevorzugt weist mindestens ein Segment mindestens eines Abformelementes Mittel zur Bewegung des Segmentes relativ zur Aufnahme des Abformelementes auf, so dass unabhängig von der Geschwindigkeit des mindestens einen weiteren Segmentes des linearen Abformelementes die Geschwindigkeit des anderen Segmentes variiert werden kann und so eine spezifische Kontur des Bauteils in einem Axialabschnitt des Bauteils eingebracht werden kann. Als Mittel zur Bewegung relativ zum linearen Abformelement können beispielsweise Führungsschienen für Zwangsführungen aber auch linear angetriebene Bewegungsmittel vorgesehen sein.

Gemäß einer weiteren Ausgestaltung der Vorrichtung sind zwei lineare Abformelemente vorgesehen, welche auf gegenüberliegenden Seiten des drehenden Rohlings mit dem Rohling oder dem vorgeformten Bauteil im Eingriff stehen. Die Belastung der drehbaren Aufnahme aufgrund der Umformkräfte, welche über die linearen Abformelemente eingebracht werden, können durch diese Ausführungsform weitestgehend kompensiert werden. Darüber hinaus ergibt sich durch die Verwendung von zwei Abformelementen, wie bereits ausgeführt, eine Erhöhung der Produktionsrate, da jedes einzelne, lineare Abformelement nur einen reduzierten Umformgrad des Rohlings oder des vorgeformten Bauteils erzielen muss.

Gemäß einer weiteren Ausgestaltung der Vorrichtung ist eine Vorformeinrichtung vorgesehen, welche eine weitere drehbare Aufnahme für einen Rohling aus Metall, insbesondere Stahl aufweist, und Drückwalzmittel aufweist, mit welchen der Rohling angeordnet auf der weiteren drehbaren Aufnahme unter Verwendung der Drückwalzmittel rotationssymmetrisch vorformbar ist. Durch diesen Vorformprozess können Rohlinge nahe an die Endkontur vorgeformt werden, um anschließend durch lineare Abformelemente die Kontur eines vorgeformten Bauteils oder eines endgeformten Bauteil zu erhalten. Durch die Vorformeinrichtung kann darüber hinaus die Kapazität der Vorrichtung gemäß der vorliegenden Erfindung erhöht werden, da die Vorformschritte parallel zu der Umformung des vorgeformten Rohlings beispielsweise in das Bauteil erfolgen kann.

Eine weitere Erhöhung der Kapazität der Vorrichtung wird dadurch erreicht, dass eine Endformeinrichtung vorgesehen ist, welche mindestens ein lineares Abformelement aufweist, das zumindest teilweise die abgerollte Außenkontur des rotationssymmetrischen Bauteils aufweist, Mittel zur Bewegung des mindestens einen linearen Abformelementes tangential und synchron zum drehenden, vorgeformten Bauteil vorgesehen sind, wobei zusätzlich Mittel zur Ausübung einer Kraft von dem mindestens einen linearen Abformelement auf das drehende, vorgeformte Bauteil vorhanden sind, so dass das vorgeformte Bauteil endformbar ist. Durch diese Einrichtung kann eine weitere Parallelisierung und Aufteilung des Verfahrens in Vorformen des Rohlings, Vorformen des Bauteils und Endformen des Bauteils eingeteilt werden und damit die einzelnen Umformschritte parallel abgearbeitet werden, so dass die Kapazität sich insgesamt deutlich vergrößert. Vorzugsweise ist die Vorformeinrichtung für den Rohling, die Vorformeinrichtung für das Bauteil und die Endformeinrichtung für das Bauteil mit einem Handlingsystem ausgestattet, so dass der Transport der zu bearbeitenden Rohlinge von der Vorformeinrichtung bis zu Endformeinrichtung automatisch erfolgt.

Im Weiteren soll nun die Erfindung anhand von Ausführungsbeispielen in Verbindung mit der Zeichnung näher erläutert werden. Die Zeichnung zeigt in
- Fig. 1: in einer Schnittansicht ein Ausführungsbeispiel eines herzustellenden, rotationssymmetrischen Bauteils in Form eines Gelenkzapfens,
- Fig. 2: eine Draufsicht eines ersten Ausführungsbeispiels einer drehbaren Aufnahme eines Rohlings,
- Fig. 3: in einer perspektivischen, schematischen Darstellung eines Ausführungsbeispiels einer Vorformeinrichtung für den Rohling,
- Fig. 4: eine perspektivische Darstellung eines ersten Ausführungsbeispiels zur Herstellung rotationssymmetrischer Bauteile,
- Fig. 5: in einer schematischen, perspektivischen Darstellung ein weiteres Ausführungsbeispiel einer Vorrichtung zur Herstellung rotationssymmetrischer Bauteile vor dem Formgebungsschritt,
- Fig. 6: in einer schematischen, perspektivischen Darstellung das Ausführungsbeispiel aus Fig. 5 nach dem Formgebungsschritt und
- Fig. 7: in einem Blockdiagramm ein Ausführungsbeispiel des erfindungsgemäßen Verfahrens.

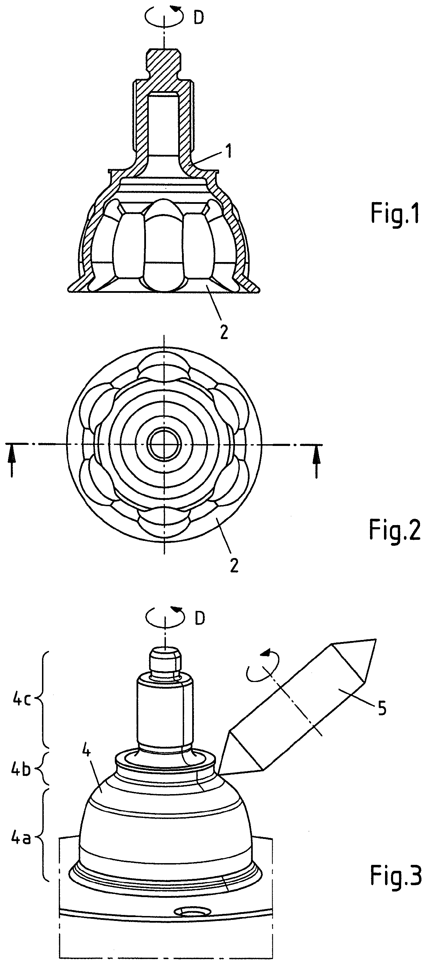

In Fig. 1 ist zunächst ein typisches, rotationssymmetrisches Bauteil 1 in Form eines Achs- und/oder Gelenkzapfens in einer Schnittansicht dargestellt, welches in der Regel aus einem Stahl hergestellt wird. Achs- und/oder Gelenkzapfen wie auch andere rotationssymmetrische Bauteile sind häufig hohen Genauigkeitsanforderungen unterworfen. Diese Genauigkeitsanforderungen müssen trotz kostengünstiger und rationaler Herstellweise erfüllt werden. In Fig. 1 ist das hergestellte Bauteil 1 noch auf der während der Herstellung mit dem erfindungsgemäßen Verfahren verwendete Aufnahme 2 dargestellt, über welche die Innenkontur des Bauteils 1 während der Erzeugung der Außenkontur eingeformt wird.

Fig. 2 zeigt eine Draufsicht auf die komplexe Formgebung der Aufnahme 2, mit deren Hilfe eine rotationssymmetrische Innenkontur beispielsweise in einen entsprechenden Rohling, welcher auf ihr angeordnet ist, eingebracht werden kann. Die Aufnahme 2 rotiert in der Regel um die im Zentrum vorgesehene Drehachse.

Sie dient insbesondere zur Aufnahme eines Rohlings 4, welcher perspektivisch, schematisch in Fig. 3 dargestellt ist. Vorzugsweise wird der Rohling 4 durch Drückwalzen unter Verwendung mindestens einer mitlaufenden oder angetriebenen Rolle 5 vorgeformt. Durch das optionale Vorformen können beispielsweise in den Rohling erste Konturen eingebracht werden, welche diesen beispielsweise in die Axialabschnitte 4a, 4b, 4c einteilt.

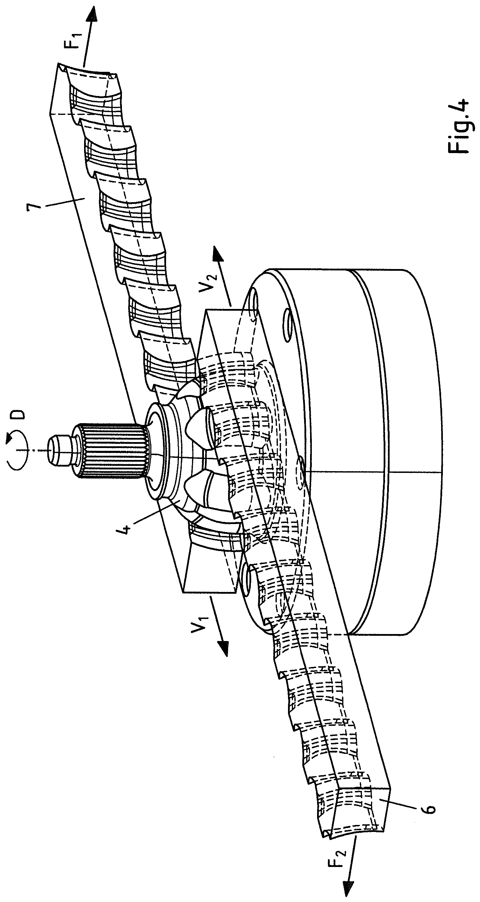

Fig. 4 zeigt nun ein erstes Ausführungsbeispiel des erfindungsgemäßen Verfahrens, bei welchem mindestens ein Abformelement, vorliegend zwei lineare Abformelemente 6, 7 gegen den sich drehenden Rohling gepresst werden und tangential zur Oberfläche des synchron drehenden Rohlings bewegt werden, wobei die linearen Abformelemente 6, 7 gegen den Rohling derart gepresst werden, dass die in den linearen Abformelementen 6, 7 eingebrachte, abgerollte Kontur eines rotationssymmetrischen Bauteils in den Rohling 4 eingebracht wird. Mit den Pfeilen F₁ und F₂ sind in Fig. 4 die Kraftrichtungen dargestellt, mit welchen die Abformelemente 6, 7 auf den Rohling 4 einwirken. Daneben ist mit den Pfeilen V₁ und V₂ auch die Bewegungsrichtung der Abformelemente dargestellt. Der Rohling 4 bewegt sich synchron zu den Bewegungen der Abformelemente 6, 7, so dass diese eine rotationssymmetrische Kontur in den Rohling einbringen können. Durch die wie in Fig. 1 dargestellt vorgesehene Kontur der Aufnahme des Rohlings, wird auch gleichzeitig eine Innenkontur in den Rohlingkörper eingebracht.

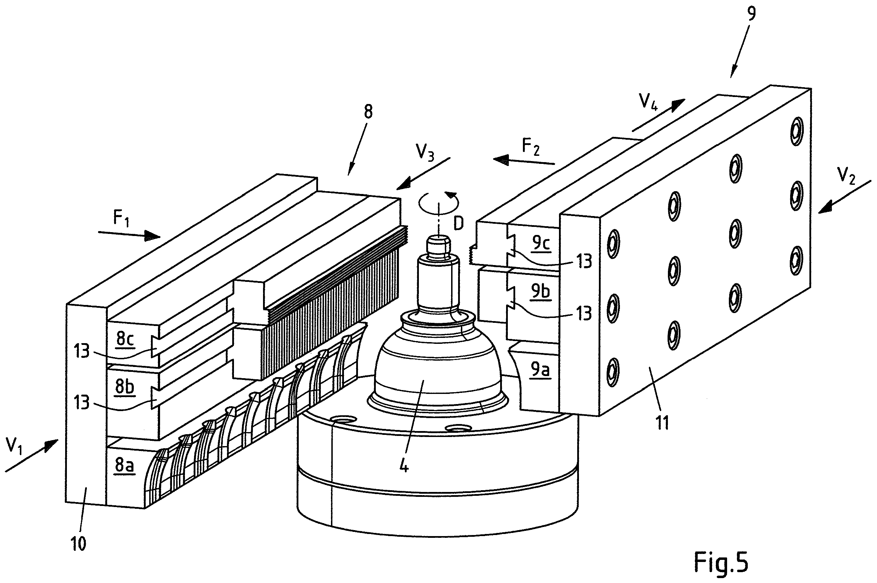

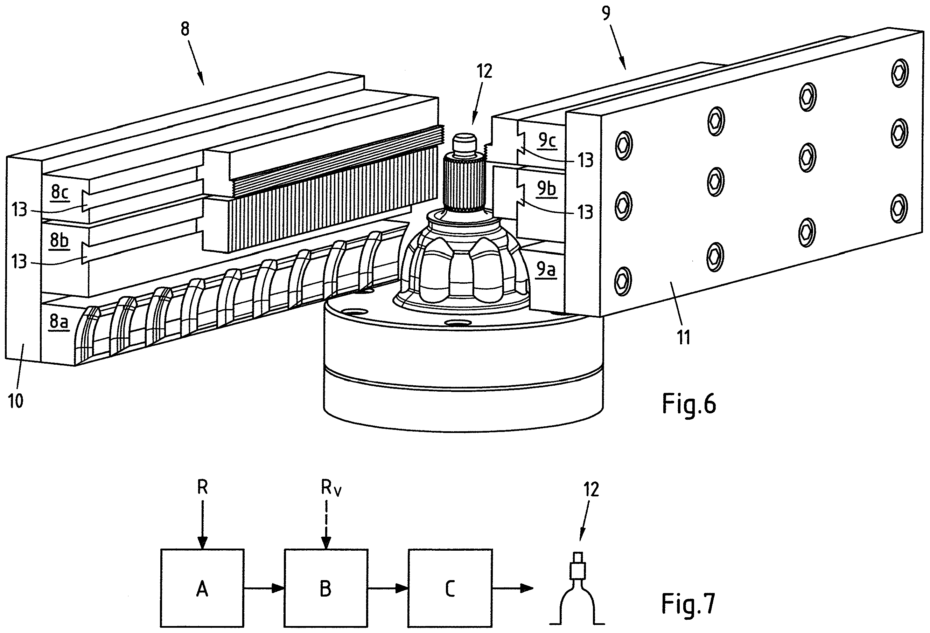

Ein weiteres Ausführungsbeispiel der Vorrichtung bzw. des Verfahrens zeigen Fig. 5 und 6. Gemäß dem Ausführungsbeispiel in Fig. 5 wird ein Rohling 4 umgeformt, bei welchem lineare Abformelemente 8, 9 verwendet werden, die in Drehachsenrichtung D in jeweils drei Segmente unterteilt sind. Die Segmente 8a, 8b, 8c, 9a, 9b, 9c sind den jeweiligen Axialabschnitten 4a, 4b, 4c des Rohlings zugeordnet und weisen jeweils den Axialabschnitten des herzustellenden Bauteils entsprechende, unterschiedliche Konturen auf. Zusätzlich können die Segmente 8c, 8b, 9c, 9b in ihrer tangentialen Bewegungsgeschwindigkeit variiert werden, da diese unabhängig von dem Segment 8a, 9a bewegbar angeordnet sind. Eine Führungsschiene durch eine Nutfederverbindung 13 ermöglicht eine gegenüber der Aufnahme 10, 11 der Segmente 8a, 8b, 8c, 9a, 9b, 9c durchführbare Relativbewegungen, welche beispielsweise über Zwangsführungsmittel oder auch über nicht dargestellte Antriebe erfolgen kann. Hierdurch kann die aufgrund der in den einzelnen axialen Abschnitten des fertigen Bauteils geforderten Konturen die Geschwindigkeit der Tangentialbewegung der Segmente des Abformelementes jeweils angepasst werden. Wie zudem in der Fig. 5 zu erkennen ist, kann auf der Aufnahme 10,11 ein Segment mindestens eines Abformelementes auf einfache Weise ausgetauscht werden, um beispielsweise eine andere Kontur in einem axialen Abschnitt des Rohlings oder Bauteils vorzusehen. In dem Ausführungsbeispiel in Fig. 5 sind zudem die Kräfte F₁ und F₂ dargestellt, mit welchen die Abformelemente, insbesondere die Segmente 8a, 8c, 8b, 9a, 9b, 9c der Abformelemente 8, 9 gegen den Rohling gepresst werden. Zusätzlich zeigen die Geschwindigkeitspfeile V₁ und V₂ an, in welche Richtung sich die Aufnahmen 10 und 11 relativ zum sich drehenden Rohling 4 bewegen.

Gleichzeitig ergibt sich die Möglichkeit, die Segmente 8c, 8b sowie 9c, 9b mit unterschiedlichen Geschwindigkeiten, beispielsweise V₃ und V₄ relativ zu den Aufnahmen 10,11 zu bewegen, so dass beim Anpressen an den auf der drehbaren Aufnahme angeordneten, beispielsweise vorgeformten Rohlings 4, die unterschiedlichen axialen Formgebungen durchgeführt werden können. Insbesondere kann die Geschwindigkeit der Segmente 8b, 8c, 9b, 9c an die in den jeweiligen Axialabschnitten vorgesehenen Konturen angepasst werden.

Fig. 6 zeigt in einer schematisch, perspektivischen Darstellung das Ausführungsbeispiel aus Fig. 5 nach dem Formgebungsvorgang. Deutlich zu erkennen ist an dem hergestellten Gelenkzapfen 12, dass dieser in den unterschiedlichen Abschnitten unterschiedliche Konturen aufweist. Der in den Fig. 5 und 6 dargestellte Verfahrensschritt kann entweder als Endform-Verfahrensschritt oder als ein Verfahrensschritt zur Bereitstellung einer Vorform verwendet werden, so dass die Umformgrade bei der Herstellung der rotationssymmetrischen Bauteile bis hin zur Endform in mehrere Schritte unterteilt werden. Mit den Pfeilen ist die Bewegungsrichtung der Aufnahme 10,11 der linearen Abformelemente 8, 9 dargestellt, damit das fertige Bauteil 12 entnommen werden kann.

Stark vereinfacht zeigt noch einmal die Fig. 7 ein Ausführungsbeispiel des Verfahrens in einem Blockdiagramm, bei welchem ein Rohling R einem ersten Vorformschritt A mittels Drückwalzen unterzogen wird, der vorgeformte Rohling im Verfahrensschritt B zu einem vorgeformten Bauteil und schließlich im Verfahrensschritt C zur Endform umgeformt wird. Bei den Verfahrensschritten B und C wird jeweils mindestens ein lineares Abformelement zum Einbringen der Konturen der Abformelemente in den synchron drehenden Rohling verwendet. Die Verfahrensschritte A, B, C werden vorzugsweise auf jeweils getrennten drehbaren Aufnahmen parallel durchgeführt, um die Produktionskapazität der Vorrichtung bzw. des Verfahrens zu steigern. Denkbar ist auch das, wie mit dem gestrichelten Pfeil angedeutet, ein vorgeformter Rohling nur zwei Verfahrensschritte, nämlich Verfahrensschritt B und anschließend Verfahrensschritt C durchläuft. Ebenso denkbar ist auch, dass der Rohling nur einen Verfahrensschritt C durchläuft.

Am Ende des Verfahrensschritts C ist ein fertig gestelltes, rotationssymmetrisches Bauteil aus einem Metall bzw. Stahl hergestellt, welches eine hohe Präzision aufweist und trotz komplexer Geometrie einfach und rational herstellbar ist. Dieses rotationssymmetrische Bauteil ist ein Achs- und/oder Gelenkzapfen 12.

## Patentansprüche

1. Verfahren zur Herstellung rotationssymmetrischer Bauteile (1, 12) aus Metall, insbesondere Stahl, bei welchem ein Rohling (4) auf einer ersten Aufnahme (2) verdrehsicher angeordnet wird, die Aufnahme (2) um eine Drehachse (D) gedreht wird, so dass der Rohling (4) um diese Drehachse (D) in Rotation versetzt wird, wobei mindestens ein lineares Abformelement (6, 7, 8, 9) mit einer zumindest teilweise eine abgerollte Außenkontur des rotationssymmetrischen Bauteils (1,12) oder einer Vorform des Bauteils aufweisenden Kontur tangential zur Oberfläche des synchron drehenden Rohlings (4) bewegt wird, wobei das lineare Abformelement (6, 7, 8, 9) gleichzeitig gegen den Rohling (4) derart gepresst wird, so dass während der Tangentialbewegung zumindest teilweise die Kontur des linearen Abformelementes (6, 7, 8, 9) in den Rohling (4) eingeformt wird,
**dadurch gekennzeichnet, dass**
ein Achs- oder Gelenkzapfen (1,12) eines Verbindungsgelenks mit einer Anschlusswelle und einem Gelenkaußenteil hergestellt wird.

2. Verfahren nach Anspruch 1,
**dadurch gekennzeichnet, dass**
der Rohling (4) durch ein in Drehachsenrichtung in mindestens zwei Segmente (8a, 8b, 8c, 9a, 9b, 9c) unterteiltes, lineares Abformelement (8,9) umgeformt wird, wobei die Segmente (8a, 8b, 8c, 9a, 9b, 9c) des linearen Abformelementes (8, 9) verschiedenen axialen Abschnitten (4a, 4b, 4c) des Rohlings (4) zugeordnet sind und in die jeweiligen axialen Abschnitte (4a, 4b, 4c) des Rohlings (4) die Kontur des zugehörigen Segments eingeformt wird.

3. Verfahren nach Anspruch 1 oder 2,
**dadurch gekennzeichnet, dass**
während des Abformens der Kontur des linearen Abformelementes (8, 9) die Tangentialgeschwindigkeiten der einzelnen Segmente (8a, 8b, 8c, 9a, 9b, 9c) des linearen Abformelementes (8, 9) verschieden sind.

4. Verfahren nach einem der Ansprüche 1 bis 3,
**dadurch gekennzeichnet, dass**
zwei auf gegenüberliegenden Seiten des Rohlings mit dem Rohling im Eingriff stehende lineare Abformelemente (6, 7, 8, 9) zum Einformen der Außenkontur in den Rohling (4) verwendet werden.

5. Verfahren nach einem der Ansprüche 1 bis 4,
**dadurch gekennzeichnet, dass**
durch mindestens ein lineares Abformelement (8a, 8b, 8c, 9a, 9b, 9c) eine Kontur der Aufnahme des Rohlings als Innenkontur in den umzuformenden Rohling eingeformt wird.

6. Verfahren nach einem der Ansprüche 1 bis 5,
**dadurch gekennzeichnet, dass**
ein rotationssymmetrisch vorgeformter Rohling (4) umgeformt wird.

7. Verfahren nach einem der Ansprüche 1 bis 6,
**dadurch gekennzeichnet, dass**
auf einer zweiten drehbaren Aufnahme der rotationssymmetrische Rohling unter Verwendung von mindestens einer Rolle durch Drückwalzen vorgeformt wird.

8. Verfahren nach einem der Ansprüche 1 bis 7,
**dadurch gekennzeichnet, dass**
mindestens auf einer weiteren drehbaren Aufnahme die Innen- und Außenkontur des fertigen Bauteils in ein vorgeformtes Bauteil unter Verwendung mindestens eines tangential zur Drehachse des Rohlings bewegten, weiteren linearen Abformelementes zumindest teilweise endgeformt wird.

9. Vorrichtung zur Herstellung eines rotationssymmetrischen Bauteils (1, 12) aus einem Metall, insbesondere Stahl aus einem Rohling (4), mit einer um eine Drehachse drehbaren Aufnahme (2) für einen Rohling aus Metall und Umformmitteln (6, 7, 8, 9), mit welchen eine Kontur in den Rohling eingeformt werden kann, zur Durchführung eines Verfahrens nach einem der Ansprüche 1 bis 8, wobei
mindestens ein lineares Abformelement (6, 7, 8, 9) vorgesehen ist, welches zumindest teilweise die abgerollte Außenkontur des rotationssymmetrischen Bauteils (1, 12) oder einer Vorform des Bauteils als Kontur aufweist, Mittel zur Bewegung des mindestens einen linearen Abformelementes (6, 7, 8, 9) tangential und synchron zum drehenden Rohling (4) vorgesehen sind, wobei zusätzlich Mittel zur Ausübung einer Kraft von dem mindestens einen linearen Abformelement (6, 7, 8, 9) auf den drehenden Rohling (4) vorhanden sind, so dass die Kontur des mindestens einen linearen Abformelementes (6, 7, 8, 9) in den Rohling (4) zumindest teilweise eingeformt werden kann,
**dadurch gekennzeichnet, dass**
die Vorrichtung dafür einrichtet ist, ein Achs- oder Gelenkzapfen (1,12) eines Verbindungsgelenks mit einer Anschlusswelle und einem Gelenkaußenteil herzustellen, wobei die Aufnahme (2) des Rohlings eine Kontur aufweist, welche beim zumindest teilweisen Einformen der Kontur des linearen Abformelementes in den Rohling (4) zumindest teilweise als Innenkontur des Gelenkaußenteils des Achs- oder Gelenkzapfens (1,12) ausgeformt werden kann.

10. Vorrichtung nach Anspruch 9,
**dadurch gekennzeichnet, dass**
als Mittel zur Bewegung des mindestens einen linearen Abformelementes (6, 7, 8, 9) mindestens eine zumindest tangential und synchron zum drehenden Rohling bewegbare Aufnahme (10,11) für das mindestens eine lineare Abformelement vorgesehen ist.

11. Vorrichtung nach einem der Ansprüche 9 bis 10,
**dadurch gekennzeichnet, dass**
das mindestens eine lineare Abformelement (8, 9) in Drehachsenrichtung in mindestens zwei Segmente (8a, 8b, 8c, 9a, 9b, 9c) aufgeteilt ist, welche verschiedenen axialen Abschnitten (4a, 4b, 4c) des Rohlings zugeordnet sind.

12. Vorrichtung nach einem der Ansprüche 9 bis 11,
**dadurch gekennzeichnet, dass**
Mittel zur Variierung der tangentialen Bewegungsgeschwindigkeiten der einzelnen Segmente (8a, 8b, 8c, 9a, 9b, 9c) des mindestens einen linearen Abformelementes (8, 9) oder der jeweiligen linearen Abformelemente (8, 9) vorgesehen sind.

13. Vorrichtung nach einem der Ansprüche 9 bis 12,
**dadurch gekennzeichnet, dass**
mindestens ein Segment (8b, 8c, 9b, 9c) mindestens eines linearen Abformelementes Mittel zur Bewegung des Segmentes relativ zur Aufnahme des linearen Abformelementes aufweist.

14. Vorrichtung nach einem der Ansprüche 9 bis 13,
**dadurch gekennzeichnet, dass**
zwei lineare Abformelemente (6, 7, 8, 9) vorgesehen sind, welche auf gegenüberliegenden Seiten des drehenden Rohlings mit dem Rohling (4) oder dem vorgeformten Bauteil im Eingriff stehen.

15. Vorrichtung nach einem der Ansprüche 9 bis 14,
**dadurch gekennzeichnet, dass**
eine Vorformeinrichtung vorgesehen ist, welche eine weitere drehbare Aufnahme für einen Rohling (4) aus Metall aufweist, und Drückwalzmittel (5) vorgesehen sind, mit welchen der Rohling angeordnet auf der weiteren drehbaren Aufnahme unter Verwendung der Drückwalzmittel (5) rotationssymmetrisch vorformbar ist.

16. Vorrichtung nach einem der Ansprüche 9 bis 15,
**dadurch gekennzeichnet, dass**
eine Endformeinrichtung vorgesehen ist, welche mindestens ein lineares Abformelement aufweist, das zumindest teilweise die abgerollte Außenkontur des rotationssymmetrischen Bauteils aufweist, Mittel zur Bewegung des mindestens einen linearen Abformelementes (6, 7, 8, 9) tangential und synchron zum drehenden vorgeformten Bauteil vorgesehen sind, wobei zusätzlich Mittel zur Ausübung einer Kraft von dem mindestens einen linearen Abformelement auf das drehende vorgeformte Bauteil vorhanden sind, so dass das vorgeformte Bauteil endformbar ist.

## Claims

1. A method for producing rotationally symmetrical components (1, 12) consisting of metal, in particular steel, in which a blank (4) is arranged in a rotationally fixed manner on a first receptacle (2), the receptacle (2) is rotated about a rotation axis (D) so that the blank (4) is set in rotation about said rotation axis (D), at least one linear moulding element (6, 7, 8, 9) being moved tangentially to the surface of the synchronously rotating blank (4), said moulding element with a contour at least partially having an unrolled outer contour of the rotationally symmetrical component (1, 12) or of a preform of the component, the linear moulding element (6, 7, 8, 9) at the same time being pressed against the blank (4) in such a manner that the contour of the linear moulding element (6, 7, 8, 9) is at least partially moulded into the blank (4) during the tangential movement,
**characterised in that**
an king pin or link pin (1, 12) of a connection link with a connection shaft and a link outer part being produced.

2. The method according to Claim 1,
**characterised in that**
the blank (4) is formed by a linear moulding element (8, 9), subdivided into at least two segments (8a, 8b, 8c, 9a, 9b, 9c) in the rotation axis direction, wherein the segments (8a, 8b, 8c, 9a, 9b, 9c) of the linear moulding element (8, 9) are associated with different axial sections (4a, 4b, 4c) of the blank (4), and the contour of the associated segment is moulded into the respective axial sections (4a, 4b, 4c) of the blank (4).

3. The method according to Claim 1 or 2,
**characterised in that**
during moulding by the contour of the linear moulding element (8, 9) the tangential velocities of the individual segments (8a, 8b, 8c, 9a, 9b, 9c) of the linear moulding element (8, 9) are different.

4. The method according to any one of Claims 1 to 3,
**characterised in that**
two linear moulding elements (6, 7, 8, 9), which are in engagement with the blank on opposite sides of the blank, are used to mould the outer contour into the blank (4).

5. The method according to any one of Claims 1 to 4,
**characterised in that**
by at least one linear moulding element (8a, 8b, 8c, 9a, 9b, 9c) a contour of the receptacle of the blank is moulded as an inner contour into the blank to be formed.

6. The method according to any one of Claims 1 to 5,
**characterised in that**
a rotationally symmetrical preformed blank (4) is formed.

7. The method according to any one of Claims 1 to 6,
**characterised in that**
on a second rotatable receptacle the rotationally symmetrical blank is preformed by pressure rolling using at least one roll.

8. The method according to any one of Claims 1 to 7,
**characterised in that**
at least on a further rotatable receptacle the inner and outer contours of the finished component are at least partially finally formed into a preformed component using at least one further linear moulding element moving tangentially to the rotation axis of the blank.

9. A device for producing a rotationally symmetrical component (1, 12) consisting of a metal, in particular steel, from a blank (4), with a receptacle (2)rotatable about a rotation axis, for a metal blank and reshaping means (6, 7, 8, 9), with which a contour can be moulded into the blank, for carrying out a method according to one of Claims 1 to 8, wherein
at least one linear moulding element (6, 7, 8, 9) being provided, which has as a contour at least partially the unrolled outer contour of the rotationally symmetrical component (1, 12) or of a preform of the component; means being provided to move the at least one linear moulding element (6, 7, 8, 9) tangentially to and synchronously with the rotating blank (4), wherein in addition means are present for exerting a force from the at least one linear moulding element (6, 7, 8, 9) on the rotating blank (4), so that the contour of the at least one linear moulding element (6, 7, 8, 9) can be moulded at least partially into the blank (4), **characterised in that**
the device is designed to produce an king pin or link pin (1, 12) of a connection link with a connection shaft and a link outer part, wherein the receptacle (2) of the blank has a contour that in the at least partial moulding of the contour of the linear moulding element into the blank (4)can be moulded at least partially as an inner contour of the link outer part of the king pin or link pin (1, 12).

10. The device according to Claim 9,
**characterised in that**
as a means for moving the at least one linear moulding element (6, 7, 8, 9) there is provided at least one receptacle (10, 11) moveable at least tangentially to and synchronously with the rotating blank, is for the at least one linear moulding element.

11. The device according to any one of Claims 9 to 10,
**characterised in that**
the at least one linear moulding element (8, 9) is subdivided into at least two segments (8a, 8b, 8c, 9a, 9b, 9c) in the rotation axis direction, which are associated with different axial sections (4a, 4b, 4c) of the blank.

12. The device according to any one of Claims 9 to 11,
**characterised in that**
means are provided for varying the tangential movement velocities of the individual segments (8a, 8b, 8c, 9a, 9b, 9c) of the at least one linear moulding element (8, 9) or of the respective linear moulding elements (8, 9).

13. The device according to any one of Claims 9 to 12,
**characterised in that**
at least one segment (8b, 8c, 9b, 9c) of at least one linear moulding element has means for moving the segment relative to the receptacle of the linear moulding element.

14. The device according to any one of Claims 9 to 13,
**characterised in that**
two linear moulding elements (6, 7, 8, 9) are provided, which are in engagement with the blank (4) or the preformed component on opposite sides of the rotating blank.

15. The device according to any one of Claims 9 to 14,
**characterised in that**
a preforming device is provided, which has a further rotatable receptacle for a blank (4) of metal, and pressure rolling means (5) are provided, with which the blank, arranged on the further rotatable receptacle , can be rotationally symmetrical preformed using the pressure rolling means (5).

16. The device according to any one of Claims 9 to 15,
**characterised in that**
a final forming device is provided, which comprises at least one linear moulding element, which has at least part of the unrolled outer contour of the rotationally symmetrical component, means being provided to move the at least one linear moulding element (6, 7, 8, 9) tangentially to and synchronously with the rotating preformed component, wherein in addition means are present for exerting a force from the at least one linear moulding element on the rotating preformed component, so that the preformed component can be finally formed.

## Revendications

1. Procédé pour la fabrication de composants symétriques par rotation (1,12) en métal, notamment en acier, pour lequel une ébauche (4) est disposée de façon anti-rotative sur un premier élément de réception (2), l'élément de réception (2) est tourné autour d'un axe de rotation (D) de telle manière que l'ébauche (4) est déplacée en rotation autour de cet axe de rotation (D), au moins un élément linéaire de formage (6,7,8,9) avec un contour comportant au moins en partie un contour extérieur déroulé du composant symétrique en rotation (1,12) ou d'une préforme du composant étant déplacé tangentiellement à la surface de l'ébauche (4) tournant de façon synchrone, l'élément linéaire de formage(6,7,8,9) étant pressé simultanément contre l'ébauche (4) de telle manière que pendant le mouvement tangentiel le contour de l'élément linéaire de formage (6,7,8,9) est conformé au moins en partie dans l'ébauche (4), **caractérisé en ce qu'**un tourillon d'essieu ou un tourillon de l'articulation (1,12) d'une articulation de liaison avec un arbre de raccordement et un barillet de joint est réalisée.

2. Procédé selon la revendication 1, **caractérisé en ce que** l'ébauche (4) est déformée par un élément linéaire de formage (8,9) divisé au moins en deux segments (8a,8b,8c,9a,9b,9c), les segments (8a,8b,8c,9a,9b,9c) de l'élément linéaire de formage (8,9) étant attribués à différentes sections axiales (4a,4b,4c) de l'ébauche (4) et le contour du segment correspondant étant conformé dans les sections axiales respectives (4a,4b,4c) de l'ébauche (4).

3. Procédé selon la revendication 1 ou 2, **caractérisé en ce que** pendant le formage du contour de l'élément linéaire de formage (8,9), les vitesses tangentielles des segments individuels (8a,8b,8c,9a,9b,9c) de l'élément linéaire de formage (8,9) sont différentes.

4. Procédé selon l'une quelconque des revendications 1 à 3, **caractérisé en ce qu'**on utilise deux éléments linéaires de formage (6,7,8,9) en prise avec l'ébauche sur les deux côtés opposés de l'ébauche pour former le contour extérieur dans l'ébauche (4).

5. Procédé selon l'une quelconque des revendications 1 à 4, **caractérisé en ce qu'**au moins un contour de l'élément de réception de l'ébauche est conformé en tant que contour intérieur dans l'ébauche à déformer par au moins un élément linéaire de formage (8a,8b,8c,9a,9b,9c).

6. Procédé selon l'une quelconque des revendications 1 à 5, **caractérisé en ce qu'**une ébauche (4) préformée symétriquement par rotation est déformée.

7. Procédé selon l'une quelconque des revendications 1 à 6, **caractérisé en ce que** sur un deuxième élément de réception rotatif, l'ébauche symétrique par rotation est préformée par fluotournage en utilisant au moins un cylindre.

8. Procédé selon l'une quelconque des revendications 1 à 7, **caractérisé en ce qu'**au moins sur un autre élément de réception rotatif, le contour intérieur et extérieur du composant fini est formé en finition au moins en partie en un composant préformé en utilisant au moins un autre élément linéaire de formage, déplacé tangentiellement à l'axe de rotation de l'ébauche.

9. Dispositif pour la fabrication d'un composant (1,12) symétrique par rotation en métal, notamment en acier à partir d'une ébauche (4), avec un élément de réception (2) rotatif autour d'un axe de rotation pour une ébauche en métal et des moyens de déformation (6,7,8,9), avec lesquels un contour peut être conformé dans l'ébauche, pour exécuter un procédé selon l'une quelconque des revendications 1 à 8, au moins un élément linéaire de formage (6,7,8,9) étant prévu, lequel comporte au moins en partie le contour extérieur déroulé du composant symétrique par rotation (1,12) ou une préforme du composant en tant que contour, des moyens étant prévus pour le déplacement d'au moins un élément linéaire de formage (6,7,8,9) tangentiellement et de façon synchrone par rapport à l'ébauche (4) tournante, des moyens existant en plus sur l'ébauche tournante (4) pour exercer une force d'au moins un élément linéaire de formage(6,7,8,9) de telle manière que le contour d'au moins un élément linéaire de formage (6,7,8,9) peut être au moins en partie conformé dans l'ébauche (4) **caractérisé en ce que** le dispositif est agencé pour réaliser un tourillon d'essieu ou un tourillon de l'articulation (1,12) d'une articulation de liaison avec un arbre de raccordement et un barillet de joint, l'élément de réception (2) de l'ébauche comportant un contour, lequel peut être formé dans l'ébauche (4) au moins en partie en tant que contour intérieur du barillet de joint de le tourillon d'essieu ou le tourillon de l'articulation (1,12), lors du formage au moins en partie du contour de l'élément linéaire de formage.

10. Dispositif selon la revendication 9, **caractérisé en ce qu'**au moins un élément de réception (10,11) mobile au moins tangentiellement et de façon synchrone par rapport à l'ébauche tournante pour au moins un élément linéaire de formage est prévu comme moyen pour le déplacement d'au moins un élément linéaire de formage (6,7,8,9).

11. Dispositif selon l'une quelconque des revendications 9 à 10, **caractérisé en ce qu'**au moins un élément linéaire de formage (8,9) est divisé dans le sens de l'axe de rotation en au moins deux segments (8a,8b,8c,9a,9b,9c) lesquels sont attribués à différentes sections axiales (4a,4b,4c) de l'ébauche.

12. Procédé selon l'une quelconque des revendications 9 à 11, **caractérisé en ce que** des moyens sont prévus destinés à modifier les vitesses de déplacement tangentielles des segments individuels (8a,8b,8c,9a,9b,9c) d'au moins un élément linéaire de formage (8,9) ou des éléments linéaires de formage respectifs (8,9).

13. Dispositif selon l'une quelconque des revendications 9 à 12, **caractérisé en ce qu'**au moins un segment (8b,8c,9b,9c) d'au moins un élément linéaire de formage comporte des moyens pour déplacer le segment par rapport à l'élément de réception de l'élément linéaire de formage.

14. Dispositif selon l'une quelconque des revendications 9 à 13, **caractérisé en ce que** deux éléments linéaires de formage (6,7,8,9) sont prévus, lesquels viennent en prise sur les côtés opposés de l'ébauche tournante avec l'ébauche (4) ou le composant préformé.

15. Dispositif selon l'une quelconque des revendications 9 à 14, **caractérisé en ce qu'**un dispositif de préformage est prévu, lequel comporte un autre élément de réception rotatif pour une ébauche (4) en métal et des moyens de fluotournage (5) sont prévus avec lesquels l'ébauche disposée sur l'autre élément de réception rotatif peut être préformée symétriquement par rotation en utilisant les moyens de fluotournage (5).

16. Dispositif selon l'une quelconque des revendications 9 à 15, **caractérisé en ce qu'**un dispositif de formage final est prévu, lequel comporte un élément linéaire de formage, qui comporte au moins en partie le contour extérieur déroulé du composant symétrique par rotation, des moyens sont prévus destinés au déplacement d'au moins un élément linéaire de formage(6,7,8,9) tangentiellement et de façon synchrone par rapport au composant préformé à tourner, des moyens existant en plus pour exercer une force d'au moins un élément linéaire de formage sur le composant préformé tournant de telle manière que le composant préformé peut recevoir une forme définitive.
